# EUROPEAN PATENT SPECIFICATION

(11) **EP 4 487 734 B1**
(45) Date of publication and mention of the grant of the patent: **24.12.2025**
(21) Application number: 23461620.9
(22) Date of filing: 05.07.2023
(51) Int. Cl.: A47C 7/72, A47C 15/00, A63F 13/24, A63F 13/98, A47C 7/54

(54) **A SET OF ERGONOMIC GAMING CAPS DESIGNED TO BE FIRMLY ATTACHED TO THE ARMRESTS OF AN ARMCHAIR**
SATZ ERGONOMISCHER SPIELKAPPEN ZUR FESTEN BEFESTIGUNG AN DEN ARMLEHNEN EINES SESSELS
ENSEMBLE DE CHAPEAUX DE JEU ERGONOMIQUES CONCU POUR ETRE FIXE SOLIDEMENT AUX ACCOUDOIRS D'UN FAUTEUIL

(43) Date of publication of application: 08.01.2025
(73) Proprietor: Uniwersytet Zielonogórski, 65-417 Zielona Góra (PL)
(72) Inventor: Leksycki, Kamil, 67-100 Nowa Sól (PL); Byczkowski, Maksymilian, 66-627 Bobrowice (PL); Dabrowski, Karol, 67-100 Nowa Sól (PL)
(74) Representative: JD&P Patent Attorneys Joanna Dargiewicz & Partners

(56) References cited:
- US-B1- 9 144 316
- US-B2- 11 247 585

## Description

The subject of the present invention is a set of ergonomic gaming caps designed to be firmly attached, respectively, to the armrests of an armchair by sliding on.

Holding a controller in the hands for long periods of time while playing computer games causes, among other things, joint pain or numbness in the upper limb muscles. Eliminating this problem and ensuring a comfortable position for the upper limbs can be ensured through stable support and positioning of the forearms and hands. There is a need to develop a design to ensure that the position of the armrests of the player's chair can be adjusted according to the player's preference and comfort, and that preferred settings can be saved.

From the Polish patent Pat.195846 is known an armrest having a mechanism for adjustment of the active position, consisting of a button, driving through a lever a ratchet wheel permanently connected to a cam. The cam has an outline formed of rectilinear sections of variable distance from the axis of rotation, the number of sections of the cam corresponding to the number of active positions of the armrest. One of the rectilinear sections of the cam rests on a stop element permanently located on a swivel; in addition, a ratchet lever cooperates with the notches of the ratchet wheel. The ratchet wheel with the cam connected to it, the ratchet lever and the stop element located on the swivel are seated in a housing which, via a pin, is fixed in the armrest mounting bracket.

In the description of the Polish utility model Ru.64653 it is disclosed an armrest swivel having a stationary mounting plate and a movable part in the form of a plate rotatably connected to the stationary plate, the stationary plate having a through opening in which the movable part is moved by means of a guide, characterised in that the stationary plate has a shape approximating a square with rounded corners, the side opposite the vertical side being formed by a vertical lower section passing into an upper section inclined towards the vertical side. The movable tile has a rectangular shape with rounded corners with horizontally located longer sides. The axis of rotation of the movable plate is located within the apex of the stationary plate between the inclined upper section and the horizontal upper side.

From the description of the utility model CN209528509U, there is known a mobile gaming chair which consists of a main body of the chair, armrests and armrest supports, the lower surfaces of the armrest supports are provided with fastening parts to fit the shape of the armrests and to accommodate handles, the front ends of the armrest supports are pivotally connected to the front ends of the armrests, and the armrest supports can cover the armrests; a locking device, which is positioned between the armrest support and the armrest, allows the armrest support and the armrest to be locked at a pre-set angle.

From the description of the patent application JP2011206172A, there is known an amusement machine armrest, the mounting part equipped with an arm can be positioned vertically and horizontally, forwards and backwards, and furthermore its angle can be adjusted by rotating it horizontally. In addition, the mounting part can be placed vertically above the table and positioned close to the handle. When in use, the mounting part deviates from the vertical line of the axis of rotation of the fixed part of the armrest set in its highest position, detachably fixed to the table, so that it does not rotate beyond the vertical line of the axis of rotation of the fixed part.

From the description of the patent application JP5258830B2, there is known a device for an armrest of a gaming machine, which is detachably mounted to a table located at the front end of the gaming machine. The device includes an arm that is vertically pivotally attached to an armrest mounting portion formed on the front end edge of the table, and an armrest attached to the arm on which the player rests his arm. The device is of such a design that it can be detached from the table by rotating the arm upwards by a preset angle. The end of the attachment part has an inverted U-shaped cross-section for coupling to a U-shaped coupling part at the end of the arm on the non-playing side. The armrest portion is attached to the end portion of the arm opposite the gaming machine side and includes an armrest portion and a support extending downwards from the armrest portion. A receiving portion for placing the support in a vertically movable manner is located on the end portion of the arm opposite the side of the gaming machine and on the lower end portion of the support. A catch for adjusting the height of the armrest position is fixed inside the receiving part along the vertical direction.

The slot machine armrest disclosed in patent application JP2013022130A is positioned on a partition plate installed between adjacent slot machines and includes a fastening element attached to the partition plate between the slot machines, a support arm pivoted to the fastening element and a support element supported by the arm.

From the description of application JP2014057647A, there is known an armrest for gaming machines freely removable/slidable by a part opening in a panel covering the clearance between adjacent bodies of the gaming machines. The armrest comprises: a fixed rail member which is located in the position of the opening part in the rear part of the panel and extends in the forward/backward direction and in the horizontal direction of the panel; a first sliding member which is movable in the direction of extension of the fixed rail member by the opening part and mounted slidingly on the fixed rail member; a second sliding member which is movable in the direction of extension of the stationary rail member by the opening portion and mounted slidingly on the first sliding member; and a portion of the armrest which is pivotally mounted on the second sliding member in a plane perpendicular to the direction of extension of the stationary rail member and on which the arm of the player playing the game is placed. The description of JP2015029514A discloses an armrest, mounted on a stationary part on the side of a gaming machine, comprising: a fixing element which is fixed on the stationary part on the side of the gaming machine, an arm mounted with a part of the armrest on which the user places his elbow and a connecting member. The connecting member is pivotally supported on the fixing member so as to allow its head to rotate freely about the vertical axis of the shaft, and the arm is pivotally supported on the connecting member so as to rotate about the horizontal axis of the shaft.

From the application JP2015116197A, there is known an armrest for a gaming machine comprising: an arm attached to a table located in the lower part of the gaming machine, containing an operating handle and extending closer to the player in a horizontal direction, and an armrest part which is positioned in the arm part so that it can move in a longitudinal direction. The armrest portion includes a body and an extension member that extends the surface of the armrest portion beyond the body. The extension member is pivotally connected to the body. Other relevant prior art is given by US11247585B2 and US9144316B1.

The description of KR102118553B1 discloses an armrest for a chair for aiming correction in an FPS game comprising: an armrest for supporting the user's arm, a linear slide guide connected to the lower part of the armrest for moving the armrest in the direction of a straight line, an arm support housing for accommodating the linear slide guide, a spring element which is installed in the arm support housing cooperating with the linear slider guide to return the linear slider guide moved backwards to its original position, and an armrest assembly to support the armrest housing on the chair body.

The purpose of the present invention is to solve a technical problem concerning the possibility of obtaining a comfortable and optimal position of the user, seated on a standard chair with armrests, during gaming, while ensuring stable support and positioning of the upper limbs and thus relieving their strain during gaming. The aim is also to be able to adjust the position settings of the user's forearm and hands, resting on the armrests of the gaming chair, in two axes, vertical Y and horizontal X, and to be able to store these settings and automatically recall them from memory at any time. No publication from the state of the art has addressed the above problem.

This objective has been reached by the gaming caps of the present invention.

The object of the invention is a set of ergonomic gaming caps, designed to be firmly fixed respectively to the armrests of a chair, by sliding, having each of them a contoured movable part for direct support of the player's upper limbs, characterised in that
each of the two caps is equipped with
   a body in the form of a base fixed firmly to the armrest of the armchair, to which, on its upper side, is attached a swivel allowing movement of both pads by means of a boat-shaped support mounted on it, moulded and movable, both in a vertical plane, defined by the Y axis, and in a horizontal plane, defined by the Y axis, for direct support of the player's upper limb,
   an equal number of stepper motors, provided with controllers and brakes, which set in motion the swivel which transmits this motion to the boat-shaped support, at least one of the stepper motors setting in motion the swivel in a vertical plane along the X axis and the other stepper motors setting in motion the swivel in a horizontal plane along the X axis,
   microprocessor controller, which controls the simultaneous movement of the caps by saving and replaying the saved positions,
   radio module for wireless communication of caps with each other,
   battery module with balancer,
   power on/off switch,
whereby one of the caps is equipped with
the radio module that acts as a transmitter connected wirelessly to the receiver of the second cap,
at least two rotary encoders acting in such a way that the first encoder controls the degree of tilt of the boat-shaped supports of both caps in the vertical plane, defined by the Y axis, by an up-and-down motion in the same direction by the same angle, and the second rotary encoder controls the degree of tilt of the boat-shaped supports in the horizontal plane, defined by the X axis, by a left-right motion in the opposite direction by the same angle, both boat-shaped supports moving simultaneously,
a keypad to control manually the positioning of the boat-shaped supports by recording the angular position settings in the vertical plane, designated by the Y axis, and in the horizontal plane, designated by the X axis, and to set the positions stored in the memory of the microprocessor controller by forcing their automatic setting at any time, and
in the second cap, the radio module acts as a receiver connected wirelessly to the transmitter of the first cap, so that it is possible to make automatic wireless adjustments to the degree of positioning of the boat-shaped supports of both caps at the same time in the vertical plane, defined by the Y axis, and in the horizontal plane, defined by the X axis.

Advantageously, the adjustment of the degree of positioning of the boat-shaped supports of the two caps at the same time in the vertical plane determined by the Y-axis and the horizontal plane determined by the X-axis is in the range of 0° to 90°.

Advantageously, the boat-shaped support of each cap is constructed with a concave horizontal section and a concave support inclined towards it.

Advantageously, each of the caps has a base with a channel-like shape and cross-section.

Advantageously, the cap is equipped with an additional handle on the side.

The invention is shown in detail in the example below and in the drawing where:
- fig. 1 shows a right-hand gaming cap 1 according to the invention, for attachment to the armrest of the right-hand armchair 36, in exploded view;
- fig. 2a-b show the left gaming cap 2 according to the invention in isometric view;
- fig. 2c-f show the right-hand gaming cap 1 according to the invention,
- fig. 3 shows a left gaming cap 3 according to the invention, for attachment to the armrest of the left armchair 36, in exploded view;
- fig. 4a-c show the left gaming cap 1 according to the invention;
- fig. 5a-e show the base 3 of the right 1 and left 2 caps according to the invention;
- fig. 6a-d show the swivel 11 of the gaming caps according to the invention;
- fig. 7a-d depict a boat-shaped support 29 gaming cap according to the invention;
- fig. 8 shows the gaming pads attached to the armrests of the gaming chair 36: right (a) and left (b) respectively, in isometric view,
- fig. 9 show a control diagram of the setting of the right 1 and left 2 caps of the set according to the invention,
- fig 10a-b show the directions and setting ranges of the gaming cap right 1,
- fig 11a-b show the directions and setting ranges of the left gaming cap 2, while
- fig 12a-c show an armchair with attached set of right 1 and left 2 pads according to the invention, in a side view (a ,c) and front view (b).

### List of reference numerals:

1 gaming cap right,
2 gaming cap left,
3 base,
4 bottom wall of base 3,
5 recess of bottom wall 4 of base 3,
6 tabs of the lower base wall 3,
7 through-holes in the tabs 6,
8 upper wall of base 3,
9 rounded part of the upper base wall 3,
10 through mounting holes,
11 swivel,
12 pad of the swivel11,
13 arms of the swivel 11,
14 blind holes of the swivel 11,
15 wall of openings,
16 boat-shaped support base 29,
17 rectangular part of the boat-shaped support base 29
18 boat-shaped support base half-valve 29
19 stepper motors,
20 socket in the upper wall of the base 3,
21 microprocessor controller,
22 radio module in the transmitter function,
23 battery module with balancer,
24 on/off switch,
25 base cover 3,
26 rotary encoders,
27 keypad,
28 radio module in the receiver function,
29 boat-shaped support,
30 concave horizontal part of the boat-shaped support 29,
31 rear support wall of the boat-shaped support 29,
32 shaped half-roll tab on rear wall of boat-shaped support support 29,
33 blind holes 33 on the undersurface of the upper base wall 3,
34 top fixing screw,
35 fixing foot,
36 seat armrest,
37 lower fixing screw,
38 charging power supply,
39 pad holder,
40 beverage holder.

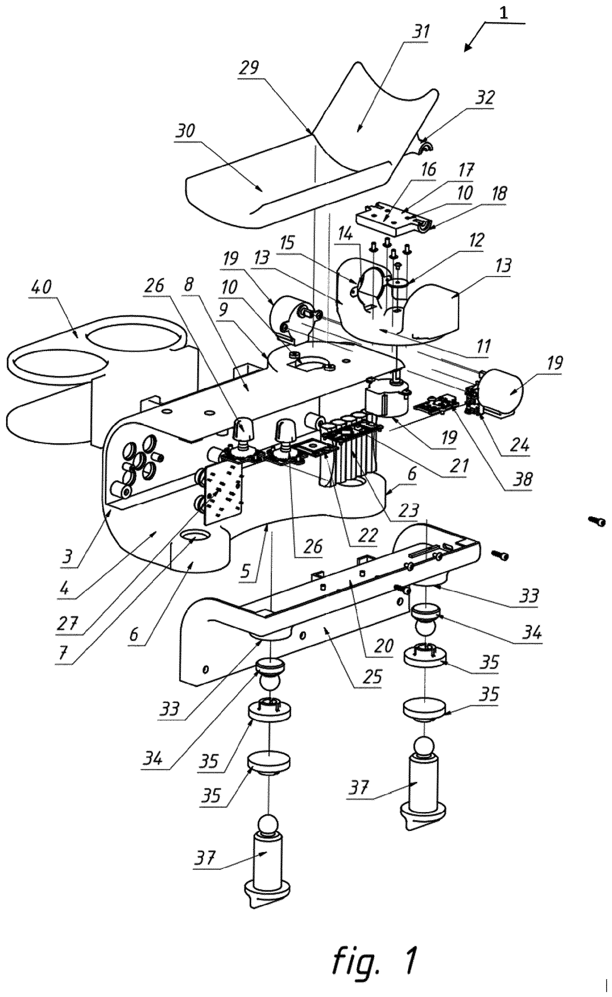

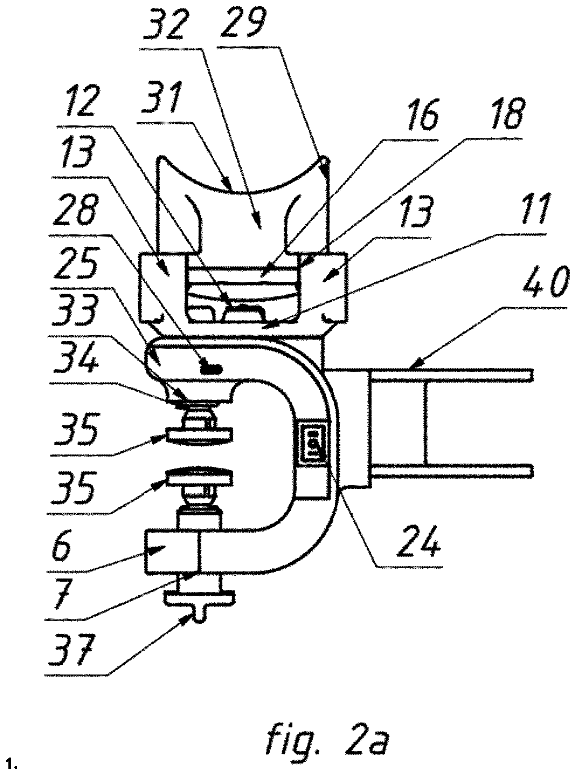

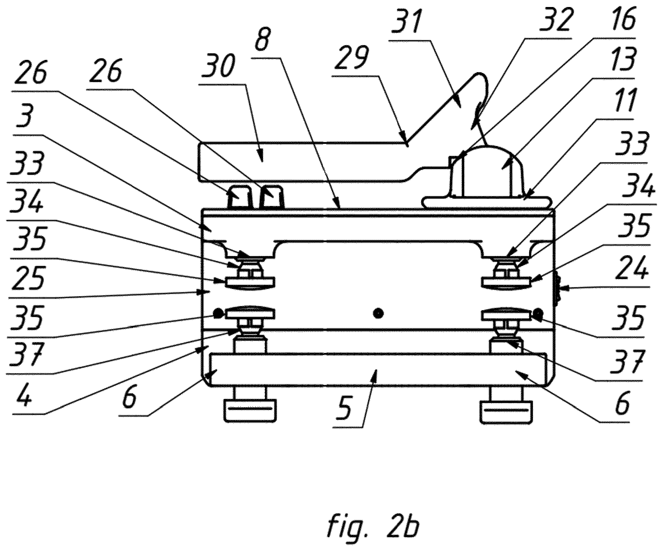

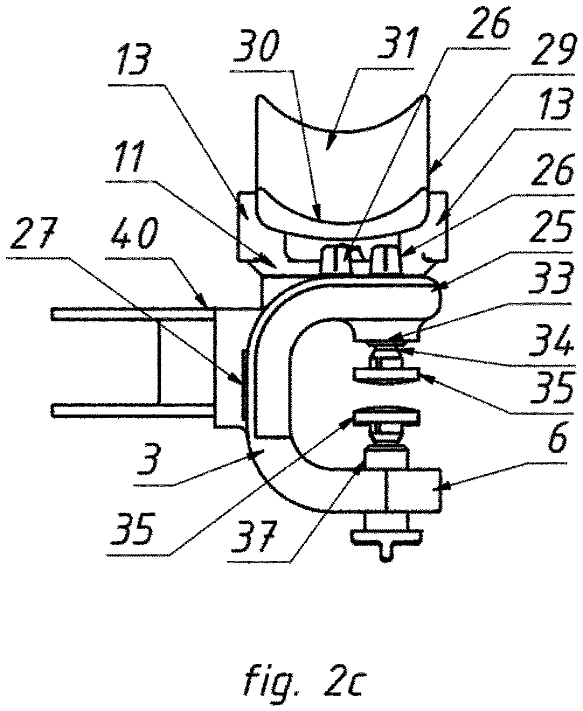

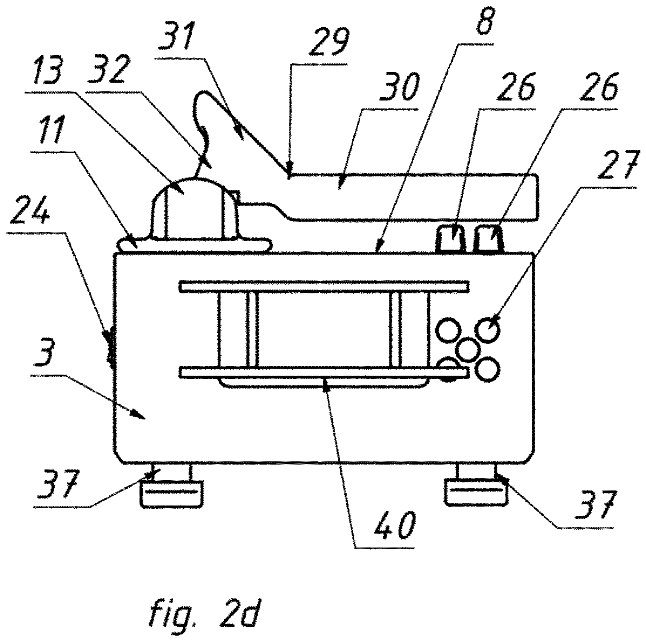

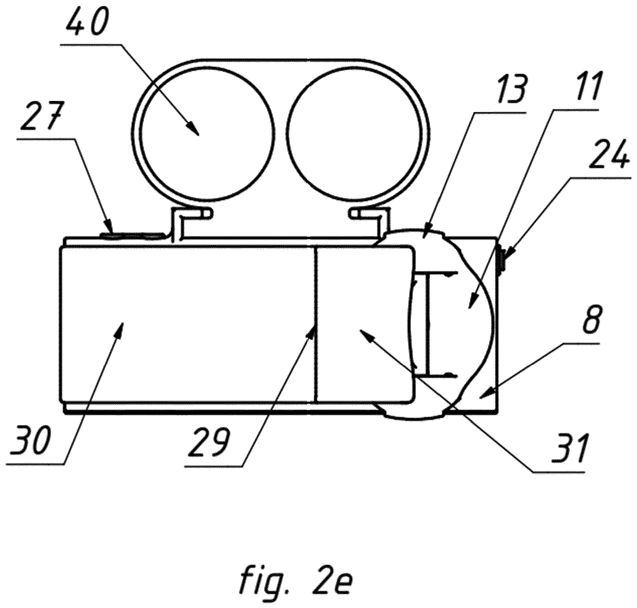

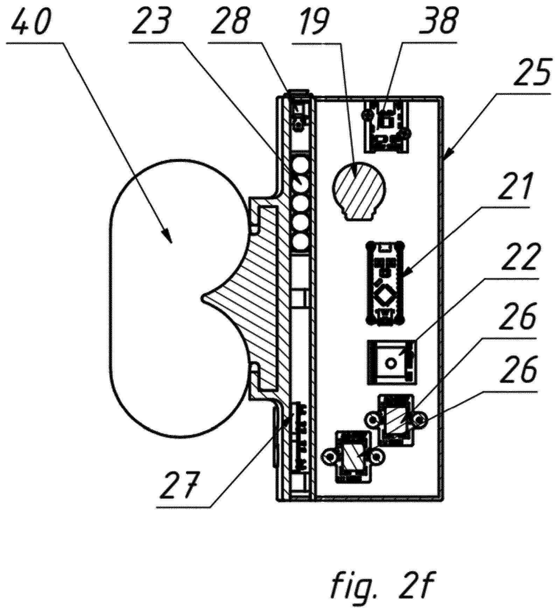

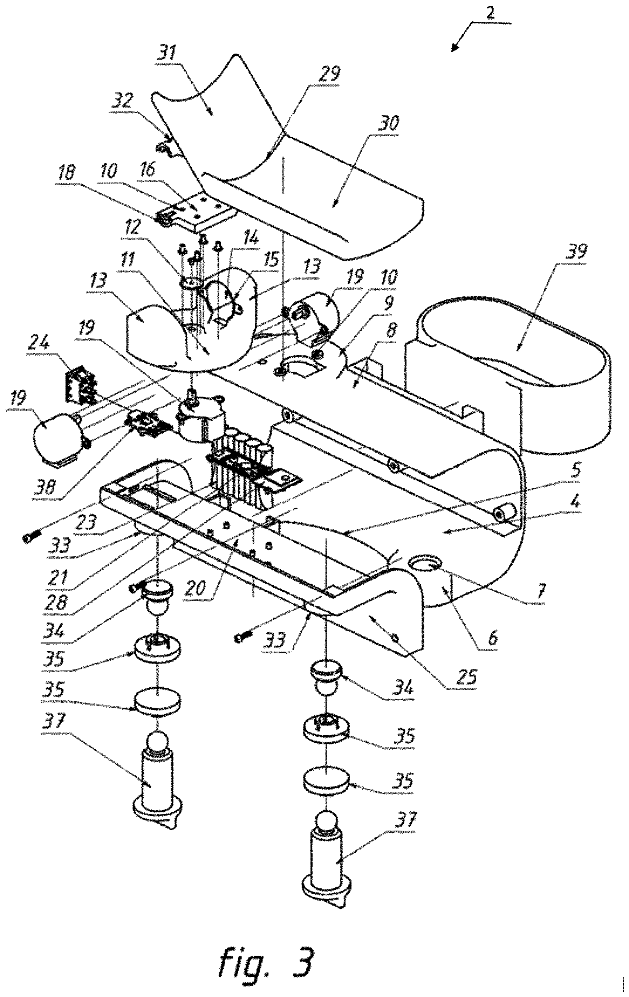

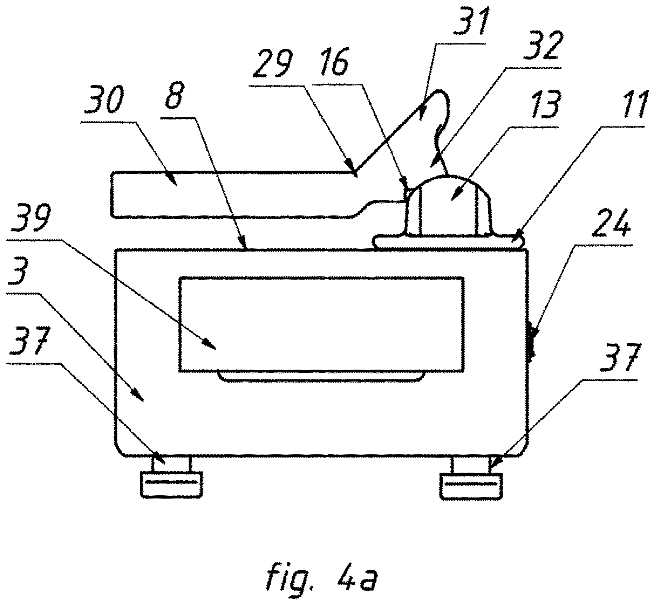

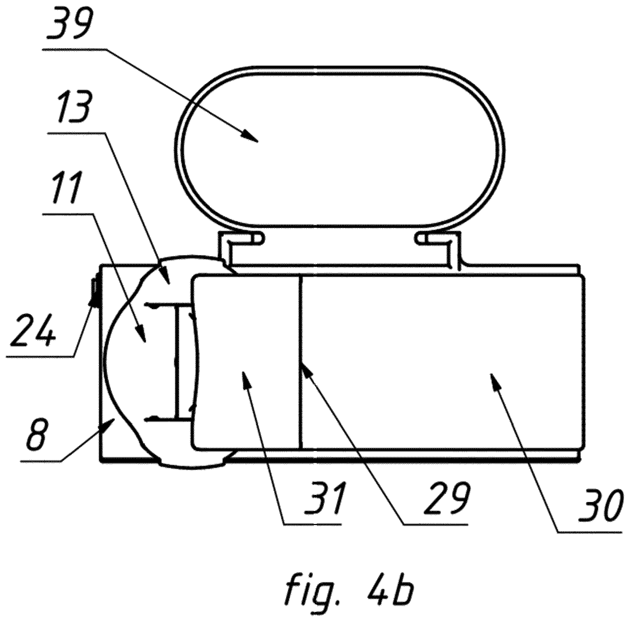

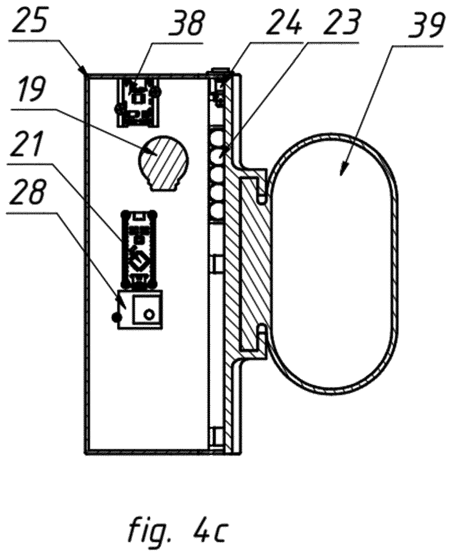

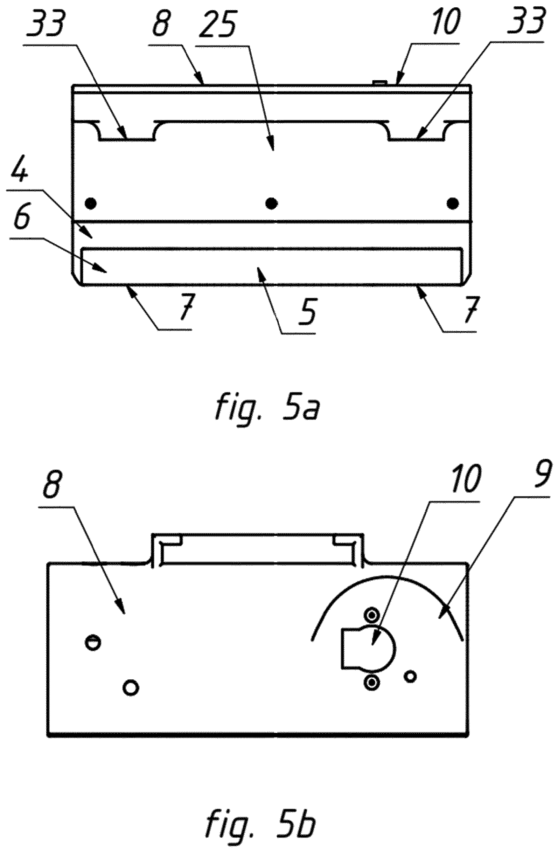

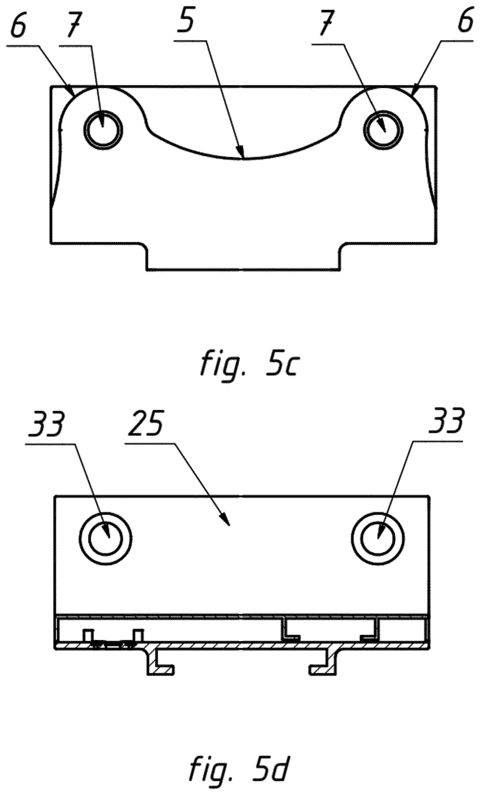

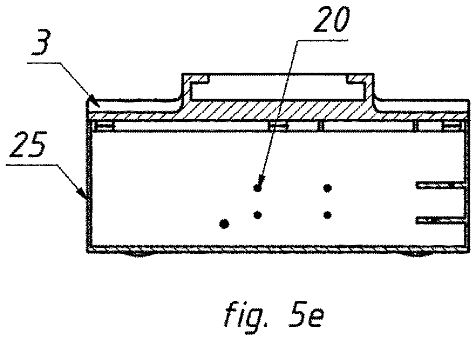

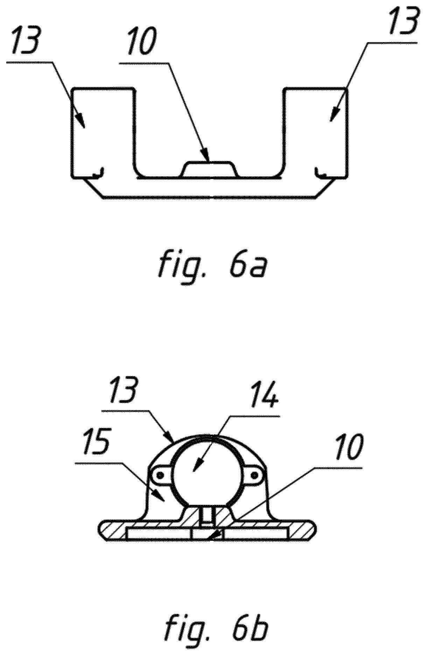

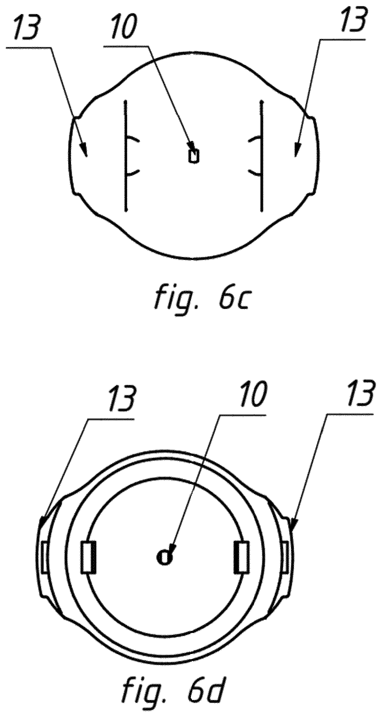

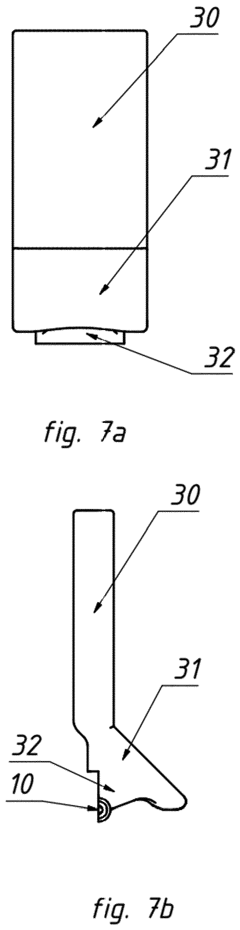

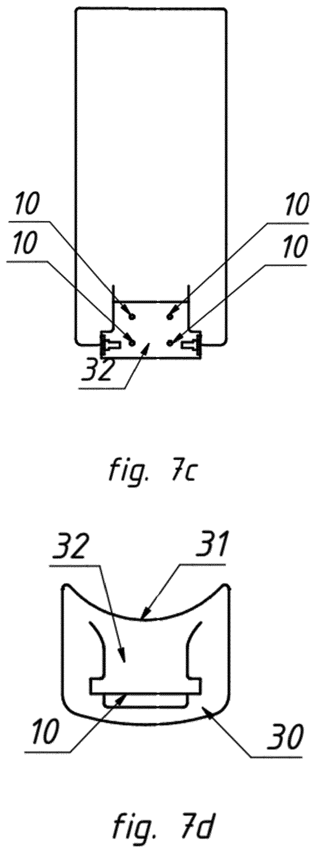

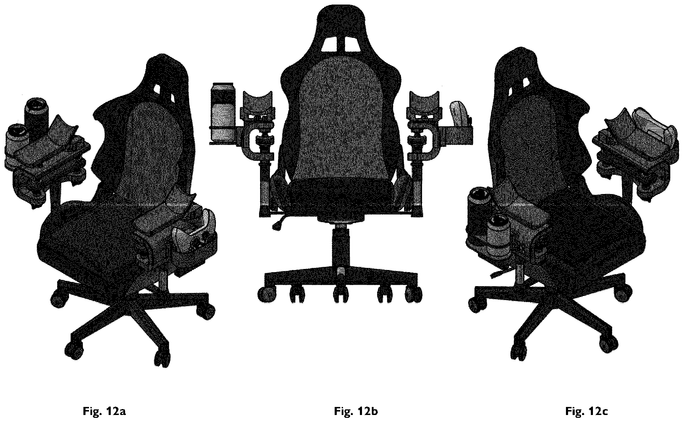

A set of automated and ergonomic gaming caps, right 1 and left 2, with implemented control tools, shown in figures 1-12, has been developed, which are designed to be firmly fixed to the armrests of the gaming chair 36, by sliding on and immobilising them with screws.

Each cap 1 and 2 has the following design.

It has a body in the form of a base 3, with a near channel-shaped shape and cross-section, securely fastened to the armrest of the chair 36. The lower wall 4 of the base 3 contains a profiled recess 5 for the support of the armrest of the chair 36, which recess 5 is terminated by two tabs 6 with through holes 7.

The upper wall 8 of the base 3, which is roughly rectangular in shape, has a rounded section 9 at one outer end fitted with through mounting holes 10.

On its upper wall 8 of the base 3 there is fixed a circular swivel 11, allowing movement of the two pads 1, 2 by means of a contoured movable, both in the vertical plane determined by the Y-axis and in the horizontal plane determined by the Y-axis, movable part for direct support of the player's upper limb constituting a boat-shaped support 29. The boat-shaped support 29 is fixed to the swivel 11 through a base 16. The boat-shaped support 29 and the base 16 are connected by screws. The boat-shaped support 29 provides support for the elbows and forearms of the user and comprises a concave horizontal portion 30 and a concave support 31 inclined thereto. On the rear wall of the support 31 a shaped half-rolled tab 32 is made, connected to the half-rolled tab 18 of the base 16 of the boat-shaped support 29, after which their ends are embedded in the walls 15 of the blind holes 14 of the arms 13 of the swivel 11. To the arms 13 of the swivel 11 and the pad 12 of the swivel 11 is attached by means of bolts the base 16 of the boat-shaped support 29, having four mounting holes 10 and having a rectangular part 17 terminating in a semi-cylindrical tab 18. To the arms 13 of the swivel 11 of each of the pads 1 and 2, in the walls 15 of the blind holes 14, by means of bolts, are attached opposite two stepper motors 19 provided with drivers and brakes. A third stepper motor 19 of each of the caps 1 and 2, provided with drivers and brakes, is attached to the swivel 11 through its mounting hole 10 on the underside of the upper wall 8 of the base 3. Adjustment of the settings is possible by means of stepper motors 19 with brakes and drivers, three stepper motors 19 with brakes and drivers for each cap, right 1 and left 2. In each overlap, 1, 2 one stepper motor 19 allows the Z-axis of the boat-shaped support 29 to be adjusted from 0° to 90°, while the other two stepper motors 19 allow the Y-axis of the boat-shaped support 29 to be adjusted from 0° to 90°. The motors 19 set the swivel 11 in motion, which transmits this motion to the boat-shaped support 29 seated thereon. One of the stepper motors 19 causes motion in the vertical plane, along the X axis, and the other two cause motion in the horizontal plane, along the X axis.

Each cap, right 1 and left 2, has automated angle adjustment in two axes: X (right-left movement) and Y (up-down movement). In the X-axis, it is possible to adjust the position of the boat-shaped support angle 29 from 0° to 90°. The same is true for the Y-axis, so it is possible to adjust the position of the boat-shaped support angle 29 from 0° to 90°.

The round swivel 11, provided with a through mounting hole 10 made in its base, is screwed to the rounded part 9 of the upper wall of the base 3 by means of a swivel washer 12 of the swivel 11 and a screw. The swivel 11 has on its edge two opposite coaxial arms 13 with blind holes 14 located in one axis, surrounded by a wall 15.

Attached to the side outer wall of the base 3 of the right armrest 1 on the swivel side 11 are the balancer battery 23 and the on/off module 24, closed by the cover 25 of the base 3.

The rear support wall 31 of the boat-shaped support 29 is located between the arms 13 of the swivel 11.

On the undersurface of the upper wall 8 of the base 3, near the ends of this wall, there are two blind holes 33 into which an upper fixing screw 34 is screwed on one side, which is screwed on the other side into the fixing foot 35 in contact with the upper surface of the seat armrest 36. Through the holes 7 in the tabs 6 of the lower wall 4 of the base 3, a lower fixing screw 37 is screwed in one side, which is screwed in the other side into the fixing foot 35, contacting the lower surface of the armrest of the seat 36. Each armrest has a charging power supply 38 fixed on the upper wall 8 of the base 3.

The microprocessor controller 21 and the radio module 22,28 are fixed in the socket 20. In the right cap 1, the radio module acts as a transmitter 22 and in the left cap 2, the radio module acts as a receiver 28. The microprocessor controller 21 controls the simultaneous movement of the caps 1, 2 by saving and restoring the saved positions,

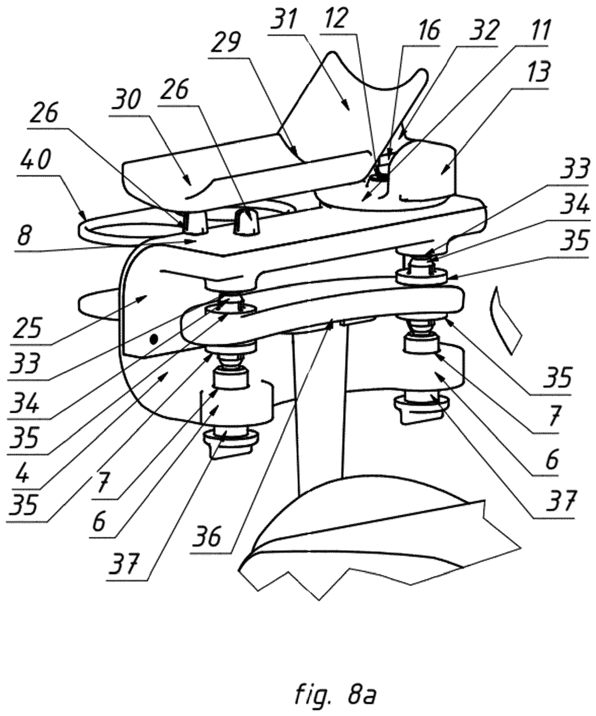

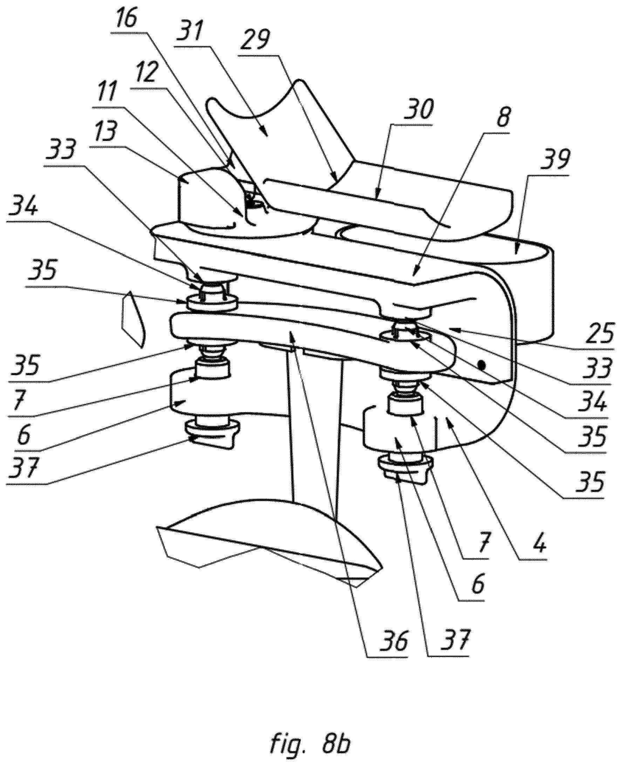

The adjustment of the position settings of the boat-shaped supports 29 of the caps 1, 2 is made possible by the fact that one of the caps, in the present example implementation of the right cap 1, is provided with two rotary encoders 26, located in the upper wall 8 of the base 3 of the right cap 1. One of them is responsible for changing the angle of the boat-shaped supports 29 of the caps, in the plane determined by the X axis, in the range of 0° to 90°, while the other is responsible for changing the angle of the boat-shaped supports 29 of the caps, in the range of 0° to 90°, with respect to the plane determined by the Y axis, as shown in fig 8. The rotary encoders 26 are present in only one cap, in combination with the microprocessor controller, but control the settings of both caps 1, 2.

The operation, i.e. the settings of the individual positions/angles of the boat-shaped supports 29 of the right 1 and left 2 caps, is integrated. This means that the changes in the setting of the boat-shaped support angles 29 of each cap 1, 2 by the two rotary encoders 26 - separately for movement in the plane determined by the Z-axis and the Y-axis, respectively - occur simultaneously.

In the Y-axis (boat-shaped support movement 29), the settings of the boat-shaped supports 29 of the right cap 1 and the left cap 2, are changed in the same direction and by the same angle, i.e. upwards or downwards. In the Z-axis (boat-shaped support movement 29), the movement is performed in the opposite direction, i.e. the boat-shaped support 29 of the left cap 2 changes its setting in the right direction, and at the same time the boat-shaped support 29 of the right cap 1 changes its setting in the left direction, by the same angle.

An analogue keypad 27 is also attached to the upper wall 8 of the base 3 of the right cap 1, equipped with encoders 26. The analogue keypad 27 allows the angular position settings to be stored and recalled from memory and forced to be set automatically, as well as the motor controllers 1-3.

The analogue keypad 27 has 5 buttons, with the possibility of storing 4 settings. By pressing the button, it is possible to store into the microprocessor's memory the settings of the angular positions of the caps 1, 2 set by the encoders 26, as well as to call up the stored settings from the microprocessor's memory: the microprocessor transmits a signal to the controllers, and the controllers direct the signal to the stepper motors 19 with brakes, causing the caps 1, 2 to be automatically called up and set in the position programmed and stored in the microprocessor. The electromagnetic brakes of the stepper motors 19 ensure that the position of these motors 19 is maintained in the event of a power failure.

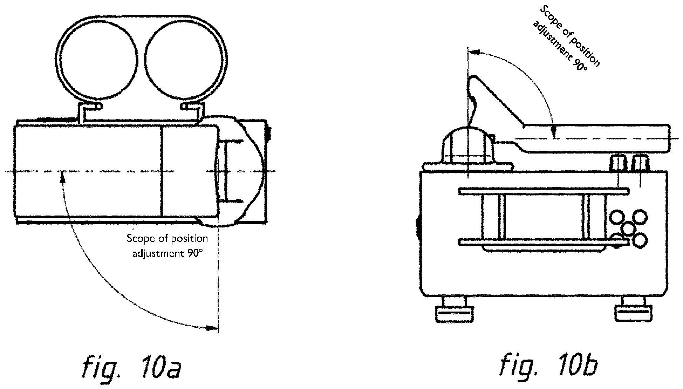

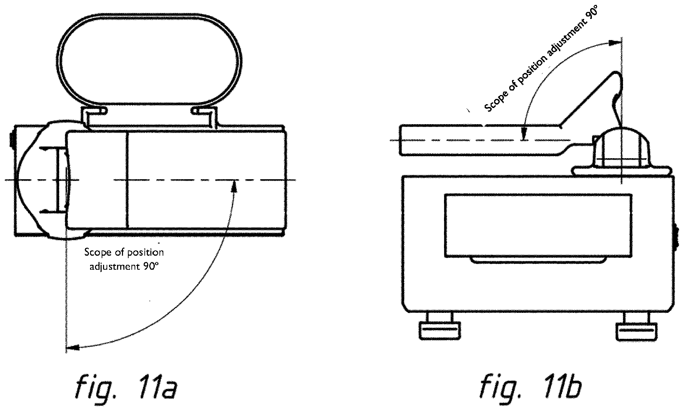

In order to memorise the position of the cap setting, it is first necessary to set it using both encoders 26, then to use the keypad 26 (press and hold the dedicated button). In this way, the setting is saved by the microprocessor controller 21. Thanks to another button of the keypad 26, dedicated to the zero position "0", it is possible, by calling up this setting from the memory of the microprocessor controller 21, associated to the keypad 27, to set the position of the boat-shaped supports 29 of the caps 1 and 2 at 0 degrees in each axis (as shown in figures10a-b and 11a-b). The zero position "0" allows the boat-shaped supports 29 in the X and Y axes to be set to 0 degrees, which are the factory positions. The factory setting of the armrest pads 1, 2 is shown in figures 1, 3 and 12. Then press and hold the button for e.g. 2 seconds and the signal from the respective button will be transmitted to the microprocessor controller 21, which will start the procedure related to the repositioning of the stepper motors 19.

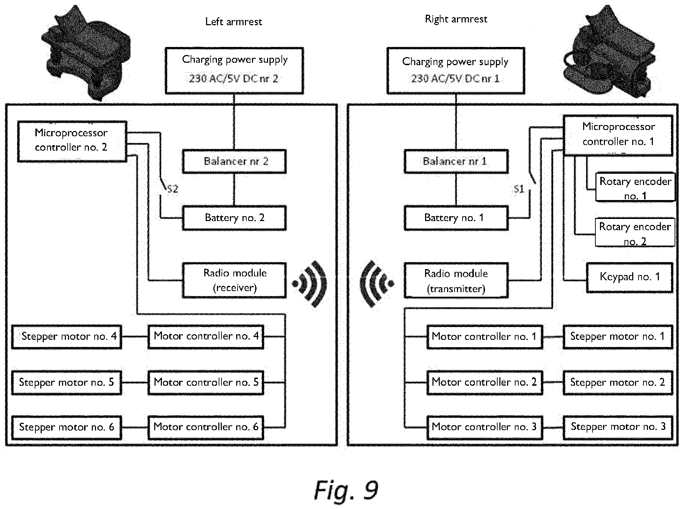

As shown in the armrest setting control diagram in fig 9, in the right cap 1, motor controllers No. 1-3 are connected to stepper motors 19 with brakes. Motor controllers No. 1-3 and stepper motors 19 with brakes make it possible to change the axis alignment: horizontally motor No. 1 and vertically motors No. 2 and 3. Motors No. 2 and 3 operate in parallel.

In the left cap 2, the microprocessor controller 21 is connected to a radio module in the function of a receiver 28 connected wirelessly to a radio module in the function of a transmitter 22, as well as motor controllers No. 4-6. Motor controllers No. 4-6 are connected to stepper motors 19 with brakes. The motor drivers No. 4-6 and the stepper motors with brakes allow the axes to be repositioned: horizontally for stepper motor No. 4 and vertically for stepper motors 19 No. 5 and 6. Motors No. 5 and 6 operate in parallel, vertically.

The two stepper motors 19 of cap right 1 (stepper motor 19 No. 1) and left 2 (stepper motor 19 No. 4) operate in parallel, i.e. at the same time and in the same direction.

The pairs of stepper motors 19 (Nos. 2, 3) of the left cap 2 and the stepper motors 19 (Nos. 5, 6) of the right cap 1 operate at the same time but in opposite directions, i.e. the boat-shaped support 29 of the left cap 2 changes its angle of position from 90° to 0° and the boat-shaped support 29 of the right cap 1 changes its angle of position from 90° to 0°. This action allows the boat-shaped supports 29 of the caps 1, 2 to be positioned towards the centre of the seat and thus according to the orientation of the hands when holding, for example, a pad in the hands.

The control tools and stepper motors 19 allow the player's preset positions to be saved according to the player's preferences. The saved boat-shaped support positions 29 of the right 1 and left 2 caps can be recalled from the memory of the microprocessor controller 21 at any time and automatically set. The microprocessor controller 21 is connected to the radio module 22, 28, whereby the cap modules 1, 2 are in wireless connection. The radio receiver module 28 of the left cap 2 is responsible for receiving, collecting and outputting data acquired from the two rotary encoders 26. A change in the position of the encoder (i.e. the position of the knob) is sent to the controller, which sends a signal to the stepper motor 19, which in turn performs the change in position, and thus there is movement of the cap in the respective axis. One of the two rotary encoders 26 is responsible for changing the angle setting in the X-axis (horizontally) from 0° to 90°, while the other is responsible for changing the angle setting in the Y-axis (horizontally) from 0° to 90°.

The microprocessor controller 21 receives a signal from the rotary encoders 26. The signal is transmitted to the radio module in the transmitter function 22, which communicates wirelessly with the radio module in the receiver function 28 of the left cap 2, transmitting data. The data are sent to the microprocessor controller 21 of the left cap 2.

In both caps, right 1 and left 2, a power supply 38 for charging 230 AC/5V DC is connected to an external socket, allowing the charging of the balancer battery module 23, which in turn is responsible for collecting, storing and releasing electrical energy within the set of caps. Connected to the balancer battery module 23 is an on/off switch module 24, a normally open binary, which allows the power supply of the kit to be switched on and off. A microprocessor controller 21 is connected to the module 23 of the battery with balancer to control the device and perform programmed tasks. The microprocessor controller 21 is connected to the following components: to the radio module 22, 28, responsible for communication also to the controllers of the two motors 4-6.

The left cap 2 has a pad holder 39 and the right cap 1 has a two-drink holder 40. The holders 39, 40 are attached to the side outer wall of the base 3.

Each of the right 1 and left 2 caps has a height of 218 mm, a length of 222 mm and a width including the handle (pad holder 39 in left 2 cap and drink holder 40 in right 1 cap): 181 mm. The mounting feet 35 are spaced (relative to their axis) 160 mm apart. Boat-shaped support 29 is 187 mm long, 80 mm wide and 67 mm high. Boat-shaped support 29 has been contoured for the player's hand, so the design has been kinked at 135 degrees to replicate a comfortable positioning/support for the arm and forearm of the hand. The length under the forearm support is 130mm and has a thickness of 20mm. The profile of the boat-shaped support section 29 under the arm and forearm support of the hand has been set at a radius of 49 mm.

The developed set of automated and ergonomic right 1 and left 2 gaming caps, attached to the left and right armrests of the chair 36 respectively, with implemented control tools, provides stable support and positioning for the upper limbs (mainly the forearms) and thus relieves the strain on the upper limb elements, i.e. the rims, arms, forearms and hands during gaming. The design provides wireless adjustment of the armrest settings, by simultaneously controlling two pads 1, 2 at a time and in two X and Y axes, and allows these settings to be saved (vertically and horizontally) and allows these settings to be automatically recalled from memory at any time. This has made it possible to adapt the player's body position to his or her preference.

## Claims

1. A set of ergonomic gaming caps designed to be firmly attached to the armrests of the chair (36) respectively, by sliding, each having a contoured movable section for direct support of the player's upper limbs,
**characterized in that**
each of the two caps is equipped with
a body in the form of a base (3) , fixed firmly to the armrest of the armchair (36), to which, on its upper wall (8), is attached a swivel (11) allowing movement of both pads, through a boat-shaped support (29) seated on it, moulded and movable, both in the vertical plane, defined by the Y axis, and in the horizontal plane, defined by the Y axis, for direct support of the player's upper limb,
an equal number of stepper motors (19), provided with controllers and brakes, which set in motion the swivel (11), which transmits this motion to the boat-shaped support (29), at least one of the stepper motors (19) setting in motion the swivel (11) in a vertical plane along the X axis and the other stepper motors (19) setting in motion the swivel (11) in a horizontal plane along the X axis,
a microprocessor controller (21), which controls the simultaneous movement of the caps by saving and reproducing the saved positions,
a radio module (22, 29) for wireless communication of the caps with each other,
a battery pack (23) with a balancer,
a power on/off switch (24),
whereby one of the caps is equipped with
the radio module (22) which acts as a transmitter connected wirelessly to the receiver (28) of the second cap,
at least two rotary encoders (26) acting so that the first encoder (26) controls the setting of the degree of tilt of the boat-shaped supports (29) of the two caps in the vertical plane, defined by the Y axis, by an upward and downward movement in the same direction, by the same angle, and the second rotary encoder (26) controls the settings of the degree of tilt of the boat-shaped supports (29) in the horizontal plane, defined by the X axis, by a left-right movement in the opposite direction, by the same angle, the movement of both boat-shaped supports (29) being simultaneous,
a keypad (27) for manually controlling the positioning of the boat-shaped supports (29) by storing the angular position settings in the vertical plane, defined by the Y axis, and in the horizontal plane, defined by the X axis, and for setting the positions stored in the memory of the microprocessor controller (21) by forcing their automatic setting at any time,
and
in the second cap, the radio module (28) acts as a receiver connected wirelessly to the transmitter (22) of the first cap,
so that
it is possible to carry out automated wireless adjustment of the degree of positioning of the boat-shaped supports (29) of the two paddles at the same time in the vertical plane determined by the Y axis and the horizontal plane determined by the X axis.

2. The set according to claim 1, **characterised in that** the adjustment of the degree of positioning of the boat-shaped supports (29) of the two caps at the same time in the vertical plane determined by the Y-axis and the horizontal plane determined by the X-axis is in the range from 0° to 90°.

3. The set according to claim 1 or 2, **characterised in that** the boat-shaped support (29) of each of the caps is constructed with a concave horizontal part (30) and a concave support (31) inclined thereto.

4. The set according to any of claims 1-3, **characterised in that** each of the caps has a base (3) having a channel-like shape and cross-section.

5. The set according to any of claims 1-4, **characterised in that** the cap is provided on the side with an additional handle (39, 40).

## Patentansprüche

1. Satz ergonomischer Spielkappen, die jeweils durch Aufschieben fest an den Armlehnen des Sessels (36) angebracht werden können und jeweils einen konturierten bewegbaren Abschnitt zur direkten Abstützung der oberen Gliedmaßen des Spielers aufweisen,
**dadurch gekennzeichnet, dass**
jede der beiden Kappen ausgestattet ist mit:
einem Körper in Form einer Basis (3), die fest an der Armlehne des Sessels (36) befestigt ist und an deren oberer Wand (8) ein Drehteil (11) angebracht ist, das über eine darauf liegende geformte und bewegbare bootförmige Stütze (29) die Bewegung beider Kappen sowohl in der durch die Y-Achse definierten vertikalen Ebene als auch in der durch die Y-Achse definierten horizontalen Ebene zur direkten Abstützung der oberen Gliedmaße des Spielers ermöglicht,
einer gleichen Anzahl von Schrittmotoren (19) mit Steuerungen und Bremsen, die das Drehteil (11) in Bewegung versetzen, das diese Bewegung auf die bootförmige Stütze (29) überträgt, wobei wenigstens einer der Schrittmotoren (19) das Drehteil (11) in einer vertikalen Ebene entlang der X-Achse in Bewegung versetzt und die anderen Schrittmotoren (19) das Drehteil (11) in einer horizontalen Ebene entlang der X-Achse in Bewegung versetzen,
einer Mikroprozessorsteuerung (21), die die gleichzeitige Bewegung der Kappen durch Speichern und Wiedergeben der gespeicherten Positionen steuert,
einem Funkmodul (22, 29) für die drahtlose Kommunikation der Kappen untereinander,
einem Batteriepack (23) mit einem Ausgleicher,
einem Ein-/Aus-Schalter (24),
wobei eine der Kappen ausgestattet ist mit:
dem Funkmodul (22), das als Sender fungiert, der drahtlos mit dem Empfänger (28) der zweiten Kappe verbunden ist,
wenigstens zwei Drehgebern (26), wobei der erste Drehgeber (26) die Einstellung des Neigungsgrades der bootförmigen Stützen (29) der beiden Kappen in der durch die Y-Achse definierten vertikalen Ebene durch eine Aufwärts- und Abwärtsbewegung in derselben Richtung um denselben Winkel steuert und der zweite Drehgeber (26) die Einstellungen des Neigungsgrades der bootförmigen Stützen (29) in der durch die X-Achse definierten horizontalen Ebene durch eine Links-Rechts-Bewegung in entgegengesetzter Richtung um denselben Winkel steuert, wobei die Bewegung beider bootförmiger Stützen (29) gleichzeitig erfolgt,
einer Tastatur (27) zur manuellen Steuerung der Positionierung der bootförmigen Stützen (29) durch Speichern der Winkelpositionseinstellungen in der durch die Y-Achse definierten vertikalen Ebene und in der durch die X-Achse definierten horizontalen Ebene und zum Einstellen der im Speicher der Mikroprozessorsteuerung (21) gespeicherten Positionen durch Erzwingen ihrer automatischen Einstellung zu jedem Zeitpunkt,
und
in der zweiten Kappe das Funkmodul (28) als Empfänger fungiert, der drahtlos mit dem Sender (22) der ersten Kappe verbunden ist,
sodass
es möglich ist, eine automatisierte drahtlose Einstellung des Positionierungsgrades der bootförmigen Stützen (29) der beiden Kappen gleichzeitig in der durch die Y-Achse bestimmten vertikalen Ebene und in der durch die X-Achse bestimmten horizontalen Ebene vorzunehmen.

2. Satz nach Anspruch 1, **dadurch gekennzeichnet, dass** die Einstellung des Positionierungsgrades der bootförmigen Stützen (29) der beiden Kappen gleichzeitig in der durch die Y-Achse bestimmten vertikalen Ebene und in der durch die X-Achse bestimmten horizontalen Ebene im Bereich von 0 ° bis 90 ° liegt.

3. Satz nach Anspruch 1 oder 2, **dadurch gekennzeichnet, dass** die bootförmige Stütze (29) jeder Kappe mit einem konkaven horizontalen Teil (30) und einer dazu geneigten konkaven Stütze (31) gebildet ist.

4. Satz nach einem der Ansprüche 1-3, **dadurch gekennzeichnet, dass** jede Kappe eine Basis (3) mit einer kanalartigen Form und einem kanalartigen Querschnitt aufweist.

5. Satz nach einem der Ansprüche 1-4, **dadurch gekennzeichnet, dass** die Kappe an der Seite mit einem zusätzlichen Griff (39, 40) versehen ist.

## Revendications

1. Ensemble de capuchons ergonomiques pour jeux vidéo conçus pour être solidement fixés aux accoudoirs du fauteuil (36) respectivement, par glissement, chacun comportant une partie mobile profilée pour soutenir directement les membres supérieurs du joueur,
**caractérisé en ce que**
chacun des deux capuchons est équipé d'
un corps en forme de base (3), fixé solidement à l'accoudoir du fauteuil (36), auquel est fixé, sur sa paroi supérieure (8), un pivot (11) permettant le mouvement des deux coussinets, par l'intermédiaire d'un support en forme de bateau (29) posé dessus, moulé et mobile, à la fois dans le plan vertical, défini par l'axe Y, et dans le plan horizontal, défini par l'axe Y, pour le soutien direct du membre supérieur du joueur,
un nombre égal de moteurs pas à pas (19), équipés de contrôleurs et de freins, qui mettent en mouvement le pivot (11), qui transmet ce mouvement au support en forme de bateau (29), au moins l'un des moteurs pas à pas (19) mettant en mouvement le pivot (11) dans un plan vertical le long de l'axe X et les autres moteurs pas à pas (19) mettant en mouvement le pivot (11) dans un plan horizontal le long de l'axe X,
un contrôleur à microprocesseur (21), qui contrôle le mouvement simultané des casquettes en enregistrant et en reproduisant les positions enregistrées,
un module radio (22, 29) pour la communication sans fil entre les casquettes,
un bloc-batterie (23) avec un équilibreur,
un interrupteur marche/arrêt (24),
l'une des casquettes étant équipée
du module radio (22) qui agit comme un émetteur connecté sans fil au récepteur (28) de la deuxième casquette,
au moins deux encodeurs rotatifs (26) agissant de telle sorte que le premier encodeur (26) commande le réglage du degré d'inclinaison des supports en forme de bateau (29) des deux capots dans le plan vertical, défini par l'axe Y, par un mouvement vers le haut et vers le bas dans la même direction, selon le même angle, et le deuxième encodeur rotatif (26) contrôle les réglages du degré d'inclinaison des supports en forme de bateau (29) dans le plan horizontal, défini par l'axe X, par un mouvement gauche-droite dans la direction opposée, selon le même angle, le mouvement des deux supports en forme de bateau (29) étant simultané,
un clavier (27) pour contrôler manuellement le positionnement des supports en forme de bateau (29) en enregistrant les réglages de position angulaire dans le plan vertical, défini par l'axe Y, et dans le plan horizontal, défini par l'axe X, et pour régler les positions enregistrées dans la mémoire du contrôleur à microprocesseur (21) en forçant leur réglage automatique à tout moment,
et
dans la deuxième casquette, le module radio (28) agit comme un récepteur connecté sans fil à l'émetteur (22) de la première casquette,
de sorte qu'
il est possible d'effectuer un réglage sans fil automatisé du degré de positionnement des supports en forme de bateau (29) des deux pagaies en même temps dans le plan vertical déterminé par l'axe Y et le plan horizontal déterminé par l'axe X.

2. Ensemble selon la revendication 1, **caractérisé en ce que** le réglage du degré de positionnement des supports en forme de bateau (29) des deux capots simultanément dans le plan vertical déterminé par l'axe Y et le plan horizontal déterminé par l'axe X est compris entre 0° et 90°.

3. Ensemble selon la revendication 1 ou 2, **caractérisé en ce que** le support en forme de bateau (29) de chacun des capuchons est construit avec une partie horizontale concave (30) et un support concave (31) incliné par rapport à celle-ci.

4. Ensemble selon l'une quelconque des revendications 1 à 3, **caractérisé en ce que** chacun des capuchons comporte une base (3) ayant une forme et une section transversale en forme de canal.

5. Ensemble selon l'une quelconque des revendications 1 à 4, **caractérisé en ce que** le capuchon est muni sur le côté d'une poignée supplémentaire (39, 40).
